# EUROPÄISCHE PATENTSCHRIFT

(11) **EP 0 659 170 B1**
(45) Veröffentlichungstag und Bekanntmachung des Hinweises auf die Patenterteilung: **20.05.1998**
(21) Anmeldenummer: 94920846.6
(22) Anmeldetag: 01.07.1994
(51) Int. Cl.: C03B 5/00, C03B 5/04, C03B 5/12, B09B 3/00, B03B 9/06

(54) **REAKTOR SOWIE VERFAHREN ZUM SCHMELZEN VON VERBRENNUNGSRÜCKSTÄNDEN**
REACTOR AND A METHOD OF SMELTING COMBUSTION RESIDUES IN THE REACTOR
REACTEUR ET PROCEDE POUR LA FUSION DE RESIDUS DE COMBUSTION

(30) Priorität: 01.07.1993 AT 1297/93
(43) Veröffentlichungstag der Anmeldung: 28.06.1995
(73) Patentinhaber: "HOLDERBANK" Financière Glarus AG, 8750 Glarus (CH)
(72) Erfinder: EDLINGER, Alfred, CH-5400 Baden (CH)
(74) Vertreter: Haffner, Thomas M., Dr.
(86) Internationale Anmeldenummer: AT9400085
(87) Internationale Veröffentlichungsnummer: WO9501312

(56) Entgegenhaltungen:
- EP-A- 0 389 314
- DE-A- 2 453 404
- DE-A- 2 718 653
- FR-A- 1 502 663
- US-A- 3 294 512
- US-A- 3 764 287
- US-A- 4 046 547

## Beschreibung

Die Erfindung bezieht sich auf einen Reaktor zum Schmelzen von anorganischen, ggf. mit Schwermetallen und/oder Schwermetallverbindungen belasteten, Verbrennungsrückständen, wobei die Charge geschmolzen und mit Oxidationsmitteln, insbesondere mit gasförmigem Sauerstoff sowie ggf. Brennstoffen beaufschlagt wird und oxidische Schlacke bei Temperaturen von über 1400°C abgezogen wird, sowie auf ein Verfahren zum Schmelzen von Verbrennungsrückständen mit einem Reaktor der eingangs genannten Art.

Bei Verfahren zur Aufbereitung von größtenteils anorganischen mit Schwermetallen und/oder Schwermetallverbindungen belasteten Müllverbrennungsprodukten zu umweltverträglichen Produkten wurde bereits vorgeschlagen, Müllverbrennungsprodukte zu schmelzen und einer schmelzthermischen Behandlung zu unterwerfen. Die schmelzthermische Behandlung diente hiebei in erster Linie der Abtrennung von flüchtigen Metallen und Metallverbindungen, welche über die Gasphase abgezogen werden konnten sowie in der Folge der Reduktion von metallischen Elementen, wobei zumindest alle diejenigen Metalle, die bei den jeweiligen Prozeßbedingungen edler als Eisen sind, aus der Oxidform in Metalle übergeführt werden sollten. Eine derartige fraktionierte Abtrennung von edleren Metallen aus der Schmelze führt in der Folge zu einem Eisenbad oder einer Kupferlegierung, wobei auch eisenlösliche Metalle enthalten sind und einer Schlackenschmelze, welche die Elemente und Verbindungen, welche in Eisen bzw. Kupfer nicht löslich sind, enthält. Zu der Gasphase können Cd, Pb und Zn ausgetragen und abgetrennt werden. Die so gebildete Schlackenschmelze konnte nach dem Abschrecken als aktiver Zuschlagstoff in Mischzementen, eingesetzt werden. Um eine derartig fraktionierte Reduktion aus der Schmelze zu ermöglichen, wurde gemäß einem älteren, nicht veröffentlichten Vorschlag so vorgegangen, daß die aufzubereitenden Verbrennungsrückstände zunächst vor der fraktionierten Reduktion einer Oxidation unter starker Verwirbelung durch Einblasen von Sauerstoff oder Sauerstoffverbindungen enthaltendem Gas unterzogen wurden. Auf diese Weise sollte sichergestellt werden, daß alle im Reaktor enthaltenen Metalle zunächst in die Oxide übergeführt wurden, um in der Folge die gewünschte fraktionierte Reduktion zu ermöglichen.

Um die erforderliche Schmelzwärme für das Schmelzen der aufzubereitenden Verbrennungsrückstände zu gewährleisten wurde bisher ein elektrisch beheizter Konverter vorgeschlagen, in welchem über dem Boden Sauerstoff eingeblasen werden konnte. Der Großteil der Schmelzwärme mußte hiebei elektrisch aufgebracht werden. Auf Grund des hohen Eisenoxidgehaltes und des CaO-Gehaltes der Schlacken läßt sich bei entsprechend hoher Schmelztemperatur eine entsprechend geringe Viskosität der Schmelze erzielen, wobei die Schmelzviskosität mit steigenden Temperaturen und steigenden Eisenoxidanteilen niedriger wird. Die Schmelze zeigt aber bei derartigen Schmelzverfahren, bei welchen unter Verwirbelung Sauerstoff eingeblasen wird, strukturviskoses Fließverhalten und beginnt je nach Intensität des Gaseintrages zu schäumen. Bei den bisherigen Verfahrensweisen hat man ein Aufschäumen der Schmelze nach Möglichkeit vermieden, da sie einen negativen Effekt hinsichtlich des Absetzverhaltens der reduzierten Schwermetalle darstellt. Ein weiterer Nachteil der bisherigen Schmelzverfahren besteht darin, daß relativ große Schmelzaggregate eingesetzt werden mußten, um die erforderlichen hohen Schmelztemperaturen sicherzustellen, da das Wärmeeinbringen durch an der Oberfläche aufschwimmende Schlacke beeinträchtigt und behindert wurde. Bei flüssiger ruhender Schmelze flotiert Restkohlenstoff auf Grund des Dichteunterschiedes nach oben und verbrennt lediglich an der Badoberfläche, wodurch er schmelzthermodynamisch relativ wirkungslos bleibt. Das gleichzeitig gebildete reduzierte metallische Eisen sinkt auf Grund des Dichteunterschiedes unter die ruhende Schmelze ab und ist auf diese Weise einer nachfolgenden Oxidation relativ schwer zugänglich, so daß bisher für das oxidative Schmelzen von Schlacken bzw. Verbrennungsrückständen relativ hohe Energie und relativ hohe Oxidationszeiten erforderlich waren.

Die Erfindung zielt nun darauf ab, einen Reaktor der eingangs genannten Art zu schaffen, welcher es ermöglicht mit wesentlich kleineren Abmessungen und wesentlich geringerem Energieaufwand bei gleichzeitig wesentlich geringerer Reaktionszeit ein Schmelzen von Verbrennungsrückständen zu erlauben.

Zur Lösung dieser Aufgabe ist der erfindungsgemäße Reaktor der eingangs genannnten Art im wesentlichen dadurch gekennzeichnet, daß der Reaktor zwei durch eine im wesentlichen vertikale Wand getrennte Kammern aufweist, daß die Wand einen Überlauf und nach dem Boden des Reaktors Rückströmöffnungen für die Schmelze aufweist, daß in eine der Kammern eine Aufgabeöffnung für die Charge und in die andere Kammer eine Abstichöffnung für oxidische Schlacke mündet, und daß in der mit der Chargenaufgabe verbundenen Kammer am Boden derselben Düsen für das Einblasen von Gasen, wie z.B. Sauerstoff, und gegebenenfalls Brennstoffen angeordnet sind. Dadurch, daß eine im wesentlichen vertikale Trennwand mit einem Überlauf und einem Rücklauf vorgesehen ist, wird es möglich, in einer der beiden durch diese vertikale Wand getrennten Kammern eine Schaumschlacke bewußt auszubilden. Die auf diese Weise gebildete Schaumschlacke weist auf Grund des strukturviskosen Fließverhalten eine geringe Viskosität und eine große Anzahl von Schaumporen, in welchen sich Sauerstoff befindet, auf, wobei auf Grund des geringen spezifischen Schaumschlackengewichtes neues Aufgabegut mehr oder weniger ungebremst durch eine derartige Schaumschlacke hindurchtreten kann. Die oxidierbaren Anteile, beispielsweise metallisches Eisen, Aluminium oder auch Restkohlenstoff, werden im Inneren der Schlacke auf Grund des hohen Sauerstoffgehaltes in den Schaumporen verbrannt und die hiebei entstehende Verbrennungswärme kommt unmittelbar der Schlacke selbst im Inneren zu und wird nicht wie bei ruhender Schmelze an der Oberfläche zu einem nicht unerheblichen Teil abgestrahlt. Dadurch, daß in der mit der Chargenaufgabe verbundenen Kammer am Boden derselben Düsen für das Einblasen von Gasen, wie z.B. Sauerstoff und ggf. Brennstoffen angeordnet sind, wird eine gerichtete Strömung aufrechterhalten, wobei in der die Schaumschlacke enthaltenden Kammer die erforderliche Verwirbelung für die stabile Aufrechterhaltung des strukturviskosen Verhaltens einer Schaumschlacke sichergestellt und gleichzeitig gewährleistet wird, daß über den Überlauf in die benachbarte Kammer übertretende Schmelze in dieser durch die im wesentlichen vertikale Wand getrennten Kammer sedimentieren kann. Durch die Rückströmöffnungen am Boden des Konverters kann dieser Zyklus mehrfach durchlaufen werden, so daß in kontinuierlicher Betriebsweise die jeweilige gewünschte Verweilzeit bis zur Ausbildung des gewünschten Oxidationsgrades in einfacher Weise einstellbar ist. Das Schlackenoxidat, welches in der Folge beispielsweise einer fraktionierten Reduktion unterworfen werden kann, wird aus der der Schaumschlackenkammer benachbarten Kammer abgezogen und kann mit seiner fühlbaren Wärme unmittelbar einer weiteren Behandlung unterworfen werden.

Der erfindungsgemäße Reaktor stellt somit einen Reaktor zur Durchführung des erfindungsgemäßen Verfahrens dar, bei welchem zum Schmelzen von Verbrennungsrückständen Gas in einem Ausmaß eingeblasen wird, welches in der mit der Chargenaufgabe verbundenen Kammer bei einer Temperatur von über 1400°C ein spezifisches Schaumgewicht der gebildeten Schaumschlacke zwischen 0,06 und 0,15 kg/l ergibt. Die wesentlichen Verfahrensparameter bei dem erfindungsgemäßen Verfahren bestehen hiebei in der Ausübung von Scherkräften bis zur Ausbildung einer Schaumschlacke mit dem gewünschten Schaumgewicht um ein hinreichendes Sauerstoffangebot in den Schaumporen sicherzustellen, welches eine rasche und vollständige Umsetzung von Aufgabegut im Inneren der Schaumschlacke ermöglicht. Die Menge des in die Schaumporen eingetragenen Sauerstoffes kann hiebei zwischen 2,8 und 3,0 kg Sauerstoff/t Schaumschlacke betragen, wodurch im Inneren der Schaumschlacke eine hohe Oxidationswärme in das Schmelzvolumen eingebracht werden kann und dort wirksam wird. Mit Vorteil wird das erfindungsgemäße Verfahren so durchgeführt, daß eine Teilmenge der überströmenden oxidierten Schlacke bei Temperaturen von über 1450°C abgezogen wird und einer partiellen Reduktion unterworfen wird, wodurch ein von unerwünschten Schwermetallen bzw. Schwermetallverbindungen freies Produkt erzielt wird, welches in der Folge als Zementzuschlagstoff bzw. Additiv Verwendung finden kann. Die Qualität des Zementadditivs kann durch die geeignete Führung des Schmelzverfahrens zuvor im wesentlichen eingestellt werden, so daß ein großes Spektrum an für einen Zusatz zu Zement in Mischzementen geeigneten Produkten herstellbar wird.

Durch die erfindungsgemäße Verfahrensweise kann mit relativ kleinen Reaktoren das Auslangen gefunden werden, da der gewünschte Oxidationsgrad durch entsprechende Kreislaufführung im Inneren des Reaktors eingestellt werden kann. Auf Grund des hohen Sauerstoffgehaltes in den Schaumporen der Schaumschlacke wird insgesamt eine wesentlich geringere Reaktionszeit bei gleichzeitig verbessertem Energieeinbringen sichergestellt, so daß in aller Regel eine gesonderte Vorwärmung entfallen kann. Sollte dies dennoch erforderlich sein, kann mit Vorteil so vorgegangen werden, daß die Charge vor dem Einbringen in den Oxidationsreaktor vorgewärmt wird, bzw. daß die Charge mit der latenten Wärme aus der Verbrennungsanlage eingesetzt wird.

Um im Inneren des Reaktors zu verhindern, daß das Aufgabegut bereits vor einer Umsetzung im Inneren der Schaumschlacke in die zweite Kammer eintritt, in welche die Sedimentation eingeleitet wird, wird mit Vorteil die Ausbildung des Reaktors so getroffen, daß in der mit den Bodendüsen versehenen Kammer eine Tauchwand nahe dem Überlauf der Trennwand angeordnet ist, deren Unterkante unterhalb der Überlaufkante liegt. Eine Ausnutzung der fühlbaren Wärme der auf diese Weise geschmolzenen oxidierten Schlacke gelingt in einfacher Weise, wenn die Ausbildung so getroffen ist, daß an dem Schlackenabstich ein weiterer reduzierend betriebener beheizter Reaktor angeschlossen ist, aus welchem Cu-Sn-Ni-Legierungen sowie ein Zn(O)/Pb(O)-Konzentrat sowie eine Schlacke ausgebracht wird, welche granuliert wird und als Mischzement weiterverwendet wird.

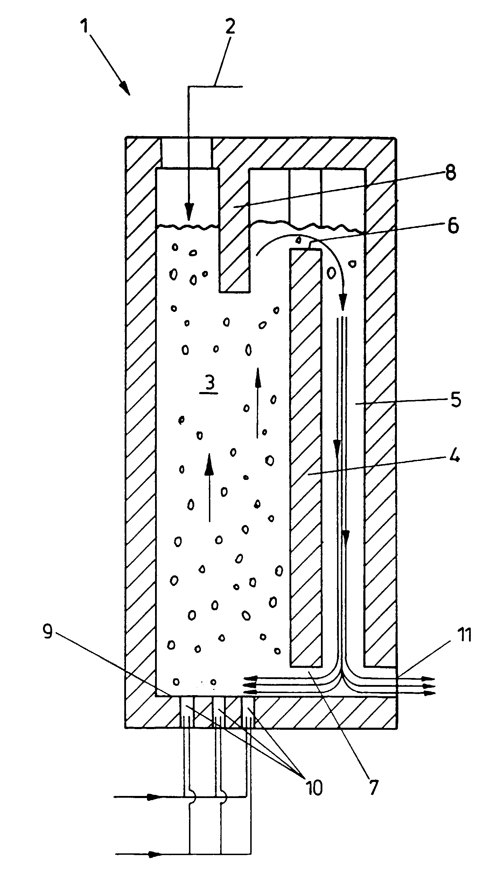

Die Erfindung wird nachfolgend an Hand eines in der Zeichnung schematisch dargestellten Reaktors für die Durchführung des erfindungsgemäßen Verfahrens näher erläutert.

In der Zeichnung ist mit 1 ein Reaktor zum Schmelzen von Verbrennungsrückständen bezeichnet, wobei die Aufgabeöffnung mit 2 bezeichnet ist. Über diese Aufgabeöffnung kann neben Verbrennungsrückständen von Müllverbrennungsanlagen naturgemäß auch andere Schlacke, wie beispielsweise Schlacke aus Schrottschmelzprozessen, eingebracht werden. Im Inneren des Reaktors ist eine erste Kammer 3 ausgebildet, welche durch eine Trennwand 4 von einer zweiten Kammer 5 getrennt ist. Die Trennwand 4 reicht nicht bis zur oberen Stirnwand des Reaktors, sondern endet in Abstand von dieser Stirnwand, wodurch ein Überlauf 6 geschaffen wird. An der Unterkante der Trennwand 4 ist eine Rückströmöffnung 7 ausgebildet, wodurch eine Zirkulation zwischen den Kammern 3 und 5 ermöglicht wird. Um ein direktes Übertreten des Aufgabegutes in die Kammer 5 zu verhindern, ist eine Tauchwand 8 vorgesehen, welche die Oberkante der Trennwand 4 in Richtung zum Boden 9 des Reaktors übergreift. Im Boden 9 des Reaktors sind Bodendüsen 10 angeordnet, über welche Sauerstoff bzw. gegebenenfalls Brennstoffe eingeblasen werden können.

Im Inneren der Kammer 3 wird durch Steuerung des entsprechenden Gasflusses über die Bodendüsen 10 eine Schaumschlacke aufrecht¶ erhalten, welche über die Überströmöffnung 6 in die zweite Kammer 5 übertreten kann. In der zweiten Kammer 5 strömt die Schlacke unter Beruhigung bzw. Sedimentation wieder zum Boden zurück. Durch Kolabieren des Schaums wird das spezifische Gewicht im Inneren des Rückströmkanals bzw. der Kammer 5 wesentlich erhöht, so daß sich eine Zwangskonvektion bzw. Kreislaufströmung auch dann einstellt, wenn die kinetische Energie des eingeblasenen Sauerstoffes bzw. der Brennstoff eine derartige Bewegung nicht ohne weiteres gewährleisten würde. Es kann somit das Einblasen von Sauerstoff bzw. von Brennstoff ausschließlich im Hinblick auf die Ausbildung der gewünschten Schaumschlacke optimiert werden, wobei für die Zwangskonvektion der Rückströmkanal mit einer entsprechenden Höhe ausgebildet wird.

Ein Teil des nicht im Kreislauf geführten Schlackenvolumens kann über eine Abstichöffnung 11 abgezogen werden, wobei das hier abgezogene schmelzflüsssige Schlackenoxidat ggf. einer Nachbehandlung durch fraktioniertes Reduzieren unterworfen werden kann.

## Patentansprüche

1. Reaktor (1) zum Schmelzen von anorganischen, ggf. mit Schwermetallen und/oder Schwermetallverbindungen belasteten, Verbrennungsrückständen, wobei die Charge geschmolzen und mit Gasen, insbesondere mit gasförmigem Sauerstoff sowie ggf. Brennstoffen beaufschlagt wird und oxidische Schlacke bei Temperaturen von über 1400°C abgezogen wird, dadurch gekennzeichnet, daß der Reaktor (1) zwei durch eine im wesentlichen vertikale Wand (4) getrennte Kammern (3,5) aufweist, daß die Wand (4) einen Überlauf (6) und nach dem Boden (9) des Reaktors (1) Rückströmöffnungen (7) für die Schmelze aufweist, daß in eine der Kammern (3) eine Aufgabeöffnung (2) für die Charge und in die andere Kammer (5) eine Abstichöffnung (11) für oxidische Schlacke mündet, und daß in der mit der Chargenaufgabe verbundenen Kammer (3) am Boden (9) derselben Düsen (10) für das Einblasen von Gasen, wie z.B. Sauerstoff, und gegebenenfalls Brennstoffen angeordnet sind.

2. Reaktor nach Anspruch 1, dadurch gekennzeichnet, daß in der mit den Bodendüsen (10) versehenen Kammer eine Tauchwand (8) nahe dem Überlauf (6) der Trennwand (4) angeordnet ist, deren Unterkante unterhalb der Überlaufkante liegt.

3. Reaktor nach einem der Ansprüche 1 oder 2, dadurch gekennzeichnet, daß an dem Schlackenabstich ein weiterer reduzierend betriebener beheizter Reaktor angeschlossen ist, aus welchem Cu-Sn-Ni-Legierungen, ein Zn(O)/Pb(O)-Konzentrat sowie eine Schlacke ausgebracht wird, welche granuliert wird und als Mischzement weiterverwendet wird.

4. Verfahren zum Schmelzen von Verbrennungsrückständen mit einem Reaktor nach einem der Ansprüche 1 bis 3, dadurch gekennzeichnet, daß Gas in einem Ausmaß eingeblasen wird, welches in der mit der Chargenaufgabe verbundenen Kammer (3) bei einer Temperatur von über 1400°C ein spezifisches Schaumgewicht der gebildeten Schaumschlacke zwischen 0,06 und 0,15 kg/l ergibt.

5. Verfahren nach Anspruch 4, dadurch gekennzeichnet, daß eine Teilmenge der überströmenden oxidierten Schlacke bei Temperaturen von über 1450°C abgezogen wird und einer partiellen Reduktion unterworfen wird.

6. Verfahren nach Anspruch 4 oder 5, dadurch gekennzeichnet, daß die Charge vor dem Einbringen in den Oxidationsreaktor (1) vorgewärmt wird, bzw. daß die Charge mit der latenten Wärme aus der Verbrennungsanlage eingesetzt wird.

## Claims

1. A reactor (1) for melting inorganic combustion residues optionally loaded with heavy metals and/or heavy metal compounds, wherein the charge is melted and fed with gases and, in particular, gaseous oxygen as well as optionally fuels and oxidic slag is drawn of at temperatures of above 1400°C, characterized in that the reactor (1) comprises two chambers (3, 5) separated by a substantially vertical wall (4), that the wall (4) comprises an overflow (6) and, following the bottom (9) of the reactor (1), backflow openings (7) for the melt, that a charging opening (2) for the charge runs into one of the chambers (3) and a tap opening (11) for oxidic slag runs into the other chamber (5), and that tuyeres (10) for blowing in gases such as, e.g., oxygen and optionally fuels are arranged in the chamber (3) connected with the charging means, on the bottom (9) thereof.

2. A reactor according to claim 1, characterized in that an immersed wall (8) is arranged in the chamber provided with the bottom tuyeres (10), near the overflow (6) of the partition wall (4), the lower edge of which immersed wall is located below the overflow edge.

3. A reactor according to any one of claim 1 or 2, characterized in that a further reducingly operated heated reactor is connected to the slag tap, from which reactor Cu-Sn-Ni alloys, a Zn(O)/Pb(O) concentrate as well as a slag are discharged, which is granulated and further used as a mixed cement.

4. A process for melting combustion residues by means of a reactor according to any one of claims 1 to 3, characterized in that gas is blown in to an extent which yields a specific foam weight of the foamed slag formed, of between 0.06 and 0.15 kg/l at a temperature of above 1400°C in the chamber (3) connected with the charging means.

5. A process according to claim 4, characterized in that a partial amount of the overflowing oxidized slag is drawn off at temperatures of above 1450°C and subjected to partial reduction.

6. A process according to claim 4 or 5, characterized in that the charge is preheated prior to being introduced into the oxidation reactor (1) or that the charge is introduced with the latent heat from the combustion plant.

## Revendications

1. Réacteur (1) pour la fusion de résidus de combustion minéraux, éventuellement chargés de métaux lourds et/ou de composés de métaux lourds, dans lequel on fait fondre la charge et on y injecte des gaz, notamment de l'oxygène gazeux ainsi que, éventuellement, des substances combustibles, et on extrait des scories formées par oxydation à des températures dépassant 1400°C, caractérisé en ce que le réacteur (1) comporte deux chambres (3,5) séparées par une paroi sensiblement verticale (4), en ce que la paroi (4) comporte un trop-plein (6) et vers le fond (9) du réacteur (1), des ouvertures de reflux (7) pour la masse fondue, en ce qu'une ouverture (2) pour l'introduction de la charge débouche dans l'une des chambres (3) et une ouverture de piquée (11) pour les scories formées par oxydation débouche dans l'autre chambre (5), et en ce que des buses (10) destinées introduire par soufflage des gaz, comme par exemple de l'oxygène, et éventuellement des substances combustibles, sont disposées dans la chambre (3) reliée au système d'introduction de la charge, au niveau du fond (9) de celle-ci.

2. Réacteur selon la revendication 1, caractérisé en ce que dans la chambre pourvue des buses de fond (10), est disposée, à proximité du trop-plein (6) de la paroi de séparation (4), une paroi plongeante (8) dont le bord inférieur est situé au-dessous du bord du trop-plein.

3. Réacteur selon l'une des revendications 1 ou 2, caractérisé en ce qu'à l'ouverture de piquée des scories est raccordé un autre réacteur chauffé, exploité de manière à réaliser une réduction et d'où sont retirés des alliages de Cu-Sn-Ni, un concentré de Zn(O)/Pb(O) ainsi que des scories, que l'on met sous forme de granulés et que l'on utilise ensuite comme ciment de mélange.

4. Procédé pour réaliser la fusion de résidus de combustion à l'aide d'un réacteur selon l'une des revendications 1 à 3, caractérisé en ce qu'on injecte par soufflage du gaz en une quantité qui fournit, dans la chambre (3) reliée au système d'introduction de la charge, à une température dépassant 1400°C, un poids spécifique des scories formées à l'état de mousse compris entre 0,06 et 0,15 kg/l.

5. Procédé selon la revendication 4, caractérisé en ce qu'on extrait une quantité partielle des scories formées par oxydation, qui débordent, à des températures dépassant 1450°C et on les soumet à une réduction partielle.

6. Procédé selon la revendication 4 ou 5, caractérisé en ce qu'on préchauffe la charge avant de la mettre dans le réacteur d'oxydation (1) ou en ce qu'on introduit la charge avec la chaleur latente tirée de l'installation de combustion.
